# EUROPEAN PATENT SPECIFICATION

(11) **EP 3 347 759 B1**
(45) Date of publication and mention of the grant of the patent: **20.03.2024**
(21) Application number: 16843322.5
(22) Date of filing: 25.05.2016
(51) Int. Cl.: G02F 1/29, G02F 1/1343

(54) **LIQUID CRYSTAL BEAM CONTROL DEVICE**
FLÜSSIGKRISTALLSTRAHLSTEUERUNGSVORRICHTUNG
DISPOSITIF DE COMMANDE DE FAISCEAU A CRISTAUX LIQUIDES

(30) Priority: 12.09.2015 US 201562217875 P; 16.10.2015 US 201562242422 P
(43) Date of publication of application: 18.07.2018
(73) Proprietor: LensVector Inc., San José, CA 95119 (US)
(72) Inventor: PRESNIAKOV, Vladimir, Québec, Québec G1S 3M1 (CA); ASATRYAN, Karen, Québec, QC G1X 4Y3 (CA); ZOHRABYAN, Armen, Québec, Québec G1X 2P1 (CA); GALSTIAN, Tigran, Quebec, Québec G1V 2W1 (CA); BAGRAMYAN, Aram, Québec, Québec G1V 1H9 (CA); CAREAU, Simon, Québec, Québec G1R 1Y1 (CA)
(74) Representative: IPAZ
(86) International application number: PCT/CA2016/050589
(87) International publication number: WO 2017/041167

(56) References cited:
- WO-A1-2014/105814
- WO-A1-2014/138974
- CN-U- 204 188 912
- DE-A1- 19 829 226
- JP-B2- 3 432 293
- US-A1- 2008 284 924
- US-A1- 2010 149 444

## Description

### Related Applications

This patent application claims priority from U.S. Provisional Patent Application serial number US 62/217,875 filed Sep. 12, 2015 and from U.S. Provisional Patent Application serial number US 62/242,422 filed Oct. 16, 2015.

### Technical Field

This patent application relates to liquid crystal beam control devices, more specifically for spatial modulation of light polarization.

### Background

Liquid crystal beam control devices are known in the art. Some such devices typically use patterned electrodes over a liquid crystal cell to create a spatial variation in the index of refraction that is useful to control a beam. To keep voltages low, electrodes can be placed on cell substrates on an inner side or sides thereof. To increase optical performance, the (form factor) size and/or aspect ratio of beam (control) shaping elements, defined mainly by the ratio of the patterned electrodes pitch and the thickness of the liquid crystal, should be relatively small. Various problems exist, including: a limited degree (extent) of angular control, poor (quality) beam intensity distribution, excessive color separation, high cost of manufacture, unsuitable operation voltage, etc.

However, now specific applications are emerging that might benefit from such elements. There are many examples of such applications, which may be qualified as "dynamic" or "smart" lighting. For example, Light Emitting Diode (LED) sources are increasingly used in the architectural lighting, automotive industry, etc., but in the large majority of cases the parameters of those illumination systems (such as diffusion, divergence, glares, direction, etc.) are fixed. At the same time, it might be extremely useful, for example, to have a lighting system that might change the divergence angle of the LED illumination system automatically when there is a car moving in the opposed direction (to avoid disturbing its driver). Other examples may be mentioned for optimized residential or general architectural lighting. In addition, with the penetration of Li-Fi technologies (replacing the Wi-Fi by smart LED sources) the ability to controllably to steer or broaden light (used both for illumination and connectivity) may be very useful. This is a reason why liquid crystal beam control devices become increasingly important.

US 2010/149444 A1 discloses a polarization independent beam shaping device including a homeotropic LC layer arranged between a pair of substrates, each substrate having an IPS-type electrode structure, wherein the extension direction of the electrodes on the one substrate orthogonally crosses the extension direction of the electrodes on the other substrate.

DE 198 29 226 A1 discloses an LCD device with a LC cell arranged between crossed polarisers, the LC cell having a homeotropic LC layer arranged between a pair of substrates each having IPS-type electrodes formed thereon, the electrode fingers on the first substrate extending orthogonally to electrode fingers on the second substrate, the liquid crystal layer being further twisted by about 90 degrees when the electrodes are energised.

JP 3 432293 B2 discloses an LCD device with a homeotropic LC layer arranged between a pair of substrates each having IPS-type electrodes formed thereon, the electrode fingers on the first substrate extending orthogonally to electrode fingers on the second substrate, wherein the LC layer includes nematic liquid crystals hosting a dichroic dye.

### Summary

Applicant has discovered a number of characteristics related to the optical performance of beam shaping liquid crystal devices.

Such devices typically use patterned electrodes arranged at one or both sides of a liquid crystal layer to create a spatial variation in the index of refraction (by electric field induced molecular reorientation) that is useful to control a light beam. Usually the efficiency of beam shaping is defined by the optical path difference (or the phase delay δΦ=L•δn•2π/λ, where L is the effective thickness, δn is the electrically induced refractive index difference and λ is the light wavelength in vacuum) undergone by light traversing the liquid crystal layer. This difference is limited by the maximal values of optical birefringence Δn (δn < Δn) and the thickness L of the liquid crystal. The beam shaping efficiency is also inversely proportional to the clear aperture (CA) of the element that is defined by the gap g between various electrode segments. Thus the ratio r= δφ/CA is one of the important factors (it contains also the aspect ratio L/CA or L/ g). That is the reason why relatively thick liquid crystal layers and relatively small gaps g may be used to increase the efficiency of beam shaping. Multiple such segments may be combined to "fill" the clear aperture of large beam shaping devices. One application of such beam shaping devices is for lighting in which the light from a light source, such as a beam from an LED light source, can be modulated from a spot beam to a slit or fan beam and/or to a broad flood beam.

To keep working voltages lower, electrodes are usually placed on the cell substrates on the inner side or sides. However, the simple physical parameters of the element (the aspect ratio, birefringence, etc.) are not the only determining factors. The refractive index modulation depth (efficiency) will also dramatically depend upon the way various electrode segments are excited.

One discovery is that the optical performance of at least some of the proposed devices can be dependent on the propagation direction of light through the device (light propagation). For example, top to bottom propagation versus bottom to top propagation can result in output beams having differing optical properties and/or characteristics when the electric field employed is different between near one substrate and near the other (typically opposite) substrate of the liquid crystal cell employed in the device. Surprisingly, measured optical property and/or characteristics differences due to propagation direction (travel) through the device can be very significant for certain layer geometries or device designs. Given that optical properties of ordinary homogenous materials are fundamentally reciprocal according to Maxwell's equations, this dependence on direction of propagation is not an obvious discovery. While some of these discovered effects can be understood, it is surprising that such effects express large measurable variations.

Applicant has also discovered that selection of liquid crystal ground state alignment and selection of an aspect ratio of patterned electrode element spacing to cell thickness can result in useful (effective) beam control when using patterned electrodes on the same substrate. Such electrodes provide an electric field between element electrodes across the spacing (along the substrate) and within the LC volume adjacent to the element electrodes in the cell gap. Such beam control can be provided free of "hot spots", namely the outward propagating output beam "exiting" the device can have a substantially uniform intensity distribution as a function of angle of/within the output beam. Applicant has further discovered, and provides a characterization of, the influence of ground state alignment of the liquid crystal on the performance of such LC cells.

For a beam control device which controls beam divergence by adding or creating divergence in a less divergent beam, applicant has further discovered that color separation in a liquid crystal beam control device can be greater for a spectrally broad incident light beam that is collimated than for a similar broadband incident light beam that is divergent. This discovery can be particularly useful for beam control applications where the least divergent incident beam desired available from a light source is not a collimated beam (light source is not a laser or the light source is not infinitely far away such as a celestial object). In such applications the output beam can be controlled from lower divergence to higher divergence. For example, such a controlled dynamic range (of beam shaping) variation can be from about ±5 degree (full width half maximum) FWHM input divergence about the normal to about ≠30 degree FWHM output divergence about the normal. Comparatively, a collimated source beam incident on the liquid crystal cell of a similar beam shaping device controlled to provide about the same ±25 degree divergence FWHM (beam spread about the normal) at the output, would express greater color separation than in the case of the incident source beam being divergent to ±5 degrees FWHM and the output beam was controlled to be ±30 degree FWHM divergent.

Applicant has further discovered that color separation in a liquid crystal beam control device is dependent of in-plane liquid crystal molecular alignment orientation component with respect to the in-plane orientation of the (patterned) strip electrodes. Liquid crystal molecules have a molecular (major) axis. LC molecular alignment means can be employed in a LC cell to induce at least an initial ground state molecular alignment. Preferably a uniform ground state molecular alignment is desired to provide a coordinated operation of the LC material over the cell or effective device aperture. The general ground state molecular alignment direction, also referred to as a director, can be decomposed along x, y and z; "in-plane molecular alignment" as employed herein refers to the x, y director orientation disregarding the z component parallel to the propagation direction of the light beam through the beam control device. More specifically, when the in-plane LC alignment is oriented across the separation gap between strip (patterned) electrodes substantially perpendicularly to the strip electrodes, color separation in the output beam is much greater than when the in-plane LC alignment is at an angle, such as between about 45 degrees to about 0 degrees, namely substantially parallel to the (patterned) strip electrodes.

Applicant has further discovered that differently oriented (e.g. orthogonal) patterned electrode arrays can be arranged, with separation provided by a thin insulating layer, on a common substrate to provide "dual direction" beam control using a single layer of liquid crystal (for the same beam polarization affected by the LC layer). Such a device can provide beam control independently in each of the directions in addition to both directions combined.

Applicant has further discovered that the operation of a unit cell may become symmetrical if (structured) patterned electrodes are present on both substrates of the liquid crystal cell which can also enable steering operation in addition to beam broadening.

Applicant has further discovered that the aspect ratio of the liquid crystal element (and the broadening performance) may be greatly improved if the parallel electrodes at each surface are independent (interdigitated) and phase modulation control mode is used.

Applicant has further discovered that by using the phase modulation control mode one can generate a twisted molecular reorientation that may rotate the polarization of input light. This would allow the broadening of light in both planes in a much simpler (effective and low-cost) way.

Applicant has yet further discovered that patterned electrodes provided on opposed substrates of a liquid crystal cell can provide different beam control zones near each respective substrate. For example, using the simultaneous activation of all independent electrode lines (one pair at each surface) with phase shifted electric signals may enable the generation of twisted liquid crystal alignments along the thickness of the cell, in depth. This twisted alignment contributes to the partial rotation of the polarization direction of the input light (along with some partial change of the state of polarization).

The invention is set out in the appended set of claims.

### Brief Description of the Drawings

The embodiments will be better understood by way of the following detailed description with reference to the appended drawings, in which:
Figure 1 is a schematic diagram illustrating in plan view an array of chirped strip electrodes having a spatially variable gap or spacing between the strip electrodes in accordance with the proposed solution;
Figure 2A is a schematic diagram illustrating in plan view a centro-symmetric array of strip electrodes arranged concentrically in accordance with the proposed solution;
Figure 2B is a schematic diagram illustrating in plan view a variant of a centro-symmetric array of strip electrodes arranged concentrically with staggered interconnections between rings in accordance with the proposed solution;
Figure 3A is a schematic diagram illustrating in plan view a centro-symmetric array of radial electrodes that are complementary to the electrodes of Figures 2A or 2B in accordance with the proposed solution;
Figure 3B is a schematic diagram illustrating in plan view a variant of a centro-symmetric array of concentric (solid lines) and orthogonal radial (dashed lines) electrodes with essentially uniform electrode spacing by reduction of the number of radial electrodes going from outer rings to inner rings in accordance with the proposed solution;
Figure 4 is a schematic (qualitative) demonstration of an operation mode that enables broadening and polarization transformation (mainly rotation) when both electrode layers are activated simultaneously in accordance with an embodiment of the proposed solution;
Figure 5 is a schematic demonstration of the evolution of broadening and polarization characteristics of a light beam propagating in a final device (for broadening unpolarised light in two azimuthal planes) based on the discovered operation mode herein, in accordance with an embodiment of the proposed solution;
Figure 6 is a schematic demonstration of cost effective final device (for broadening unpolarised light in two azimuthal planes) based on the discovered operation mode herein, in accordance with an embodiment of the proposed solution;
Figures 7A and 7B illustrate an experimental demonstration of beam broadening and polarization behavior of a beam of light when only one of the electrode layers is activated in accordance with an embodiment of the proposed solution;
Figure 8 illustrates an experimental demonstration of beam broadening and polarization behavior of a beam of light when both of electrode layers are activated, in accordance with an embodiment of the proposed solution;
Figures 9A and 9B illustrate via experimental demonstrations the importance of having independent electrodes and applying the selected phase delays to obtain acceptable light broadening: in Figure 9A all electrodes receive a drive signal having 5V in the same phase whereas in Figure 9B all electrodes receive corresponding drive signals having 5V but their phases are changing to 0, 180, 90, 270 degrees respectively, in accordance with an embodiment of the proposed solution;
Figures 10A and 10B are schematic demonstrations of double layered electrode configuration wherein "pairs" of independently controlled electrodes are fabricated at different levels (separated by thin isolation layers): Figure 10A illustrates a 3D schematic view of one beam control device element while Figure 10B shows across sectional view of 3 adjacent elements arranged in accordance with an embodiment of the proposed solution;
Figure 11 is schematic demonstration of a beam control device capable of broadening in one desired (azimuthal) plane only (or in the perpendicular azimuthal plane), and double broadening of the desired polarization component of light letting the perpendicular component remain unaffected in accordance with an embodiment of the proposed solution; and
Figure 12A is a schematic plan view of substrates of a LC cell with "excited" twisted molecular reorientation (when all electrodes on opposed substrates are activated simultaneously and independently with different phases) which may be used to broaden unpolarized (natural) light in two (azimuthal) planes in accordance with an embodiment of the proposed solution; and
Figure 12B is another schematic plan view of the substrates of another LC cell with "excited" twisted molecular reorientation (when all electrodes on opposed substrates are activated simultaneously and independently with different phases) which may be used to broaden unpolarized (natural) light in two (azimuthal) planes in accordance with an embodiment of the proposed solution.

While the layer sequence described is of significance, reference to "top", "bottom", "front" and "rear" qualifiers in the present specification is made solely with reference to the orientation of the drawings as presented in the application and do not imply any absolute spatial orientation.

### Detailed Description

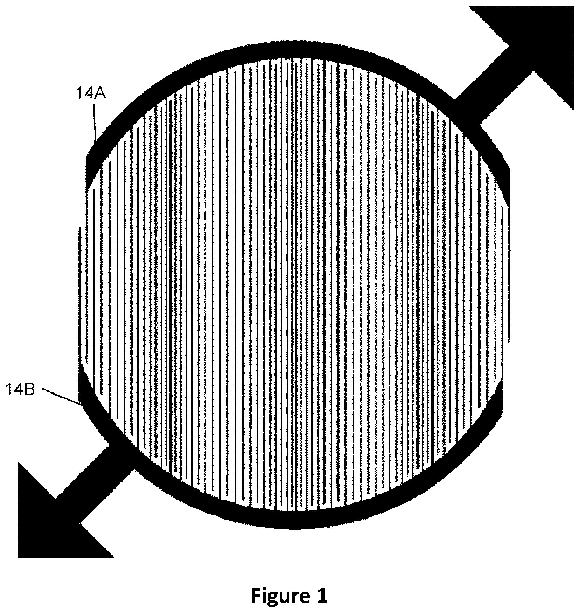

In the embodiment of the proposed solution illustrated in Figure 1, there is shown an electrode array having strip electrodes 14A and 14B. The electrode spacing g is 50 microns in the middle of the 6 mm device aperture and 100 microns at the outer sides. In the example illustrated, the gap g increases (can also decreases) by 5 microns from one gap to the next. Small gaps provide a higher beam shaping or beam steering ability or power, and larger gaps provide smaller power. Such variation of electrode gap g may be linear or non-linear. An effect of the variation, or chirp, can be to eliminate or reduce color separation and hot spot formation in the (transmitted) projected light beam. This is because different portions of the overall optical device will redirect the same wavelength (i.e. color) of light in different directions.

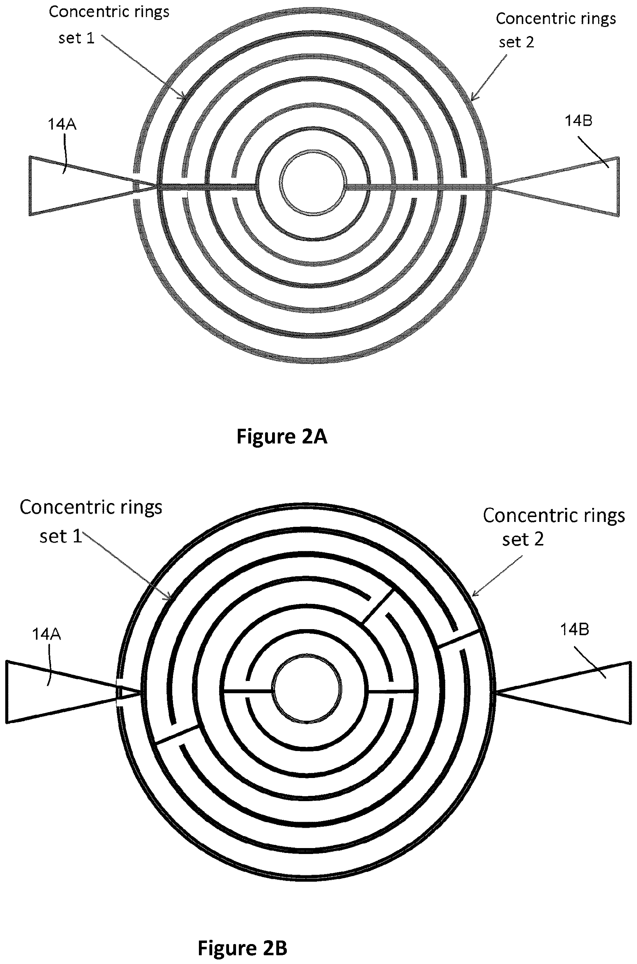

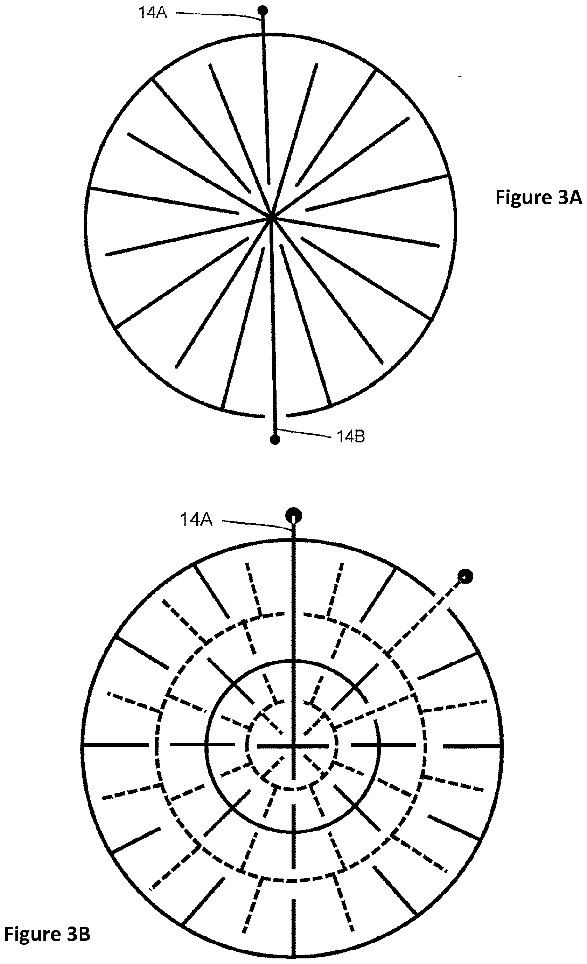

For example, a beam can have symmetry with respect to an optical axis. In such as case, a centro-symetric arrangement of strip electrodes can be provided as concentric rings 14A and 14B as shown schematically in Figure 2A. The spacing g of the rings can be closer near the central optical axis and farther apart from center near the outermost ring (or device aperture edge) to provide a more uniform (even) beam spread. The spacing g can also be configured to take into consideration a beam intensity profile for example to provide more elements where the intensity is greater. This type of electrode (concentric rings) may be used along with a star-shaped interdigitated electrode structure on the opposed substrate of the cell, as shown in Figure 3A or 3B. In some implementations conductive electrode traces interconnecting the concentric rings can induce undesirable effects in the projected beam, as illustrated in Figure 2B the conductive electrode traces interconnecting the concentric rings can be provided at different, preferably random, angle about the normal.

It will be appreciated that Figures 1 and 2 merely illustrate schematically strip electrode patterns, and that such patterns can be applied to a variety of liquid crystal cell designs, including those described herein. In the case of concentric rings, beam shaping or beam steering is done in the one radial direction with respect to the optical axis, and thus a typical beam control device geometry can employ two layers of liquid crystal, one for each light polarization. The spatial chirp may also be applied in circular or star shaped electrode implementations. A particular version of star electrodes, for example illustrated in Figure 3B, may contain additional branches to provide various gap g values, including equidistant implementations.

Since the direction of light polarization is determined by the electrode layout when the liquid crystal has homeotropic alignment, homeotropic alignment is less desirable for use with concentric ring electrodes for beam control devices that are to act on both polarizations of light. However, employing a 90 degree rotator placed between two homeotropicly ground state aligned LC cells, each LC cell having substantially identical concentric ring elements with all-homeotropic alignment can provide beam control for unpolarized light. It will be appreciated that this embodiment provides a couple of advantages: 1) full polarization independent operation for 2D beam broadening can consist of only two LC cells instead of four; and 2) the hot spots/lines may be reduced (eliminated) especially when using a labyrinth concentric design of strip electrodes (see Figure 2B) with various gap g values.

Put another way, in a variant embodiment, Figure 2B shows how the bridge connections between the concentric rings in Figure 2A can be staggered (about the optical axis) around the beam control device aperture so as to reduce the appearance of artifacts, as preferably random staggering improves symmetry about the optical axis. Figure 3A shows a centro-symmetric radial configuration of electrodes that are orthogonal to the concentric rings of Figures 2A, 2B. The electrode configuration of Figure 3A can be provided on a common substrate as a concentric electrode arrangement with separation by an insulating layer, which can be added on the opposed substrate of the same LC cell, or it can be associated with a separate liquid crystal cell. Figure 3B is a schematic plan view of a centro-symmetric array of concentric and orthogonal radial of electrodes 14A (solid lines) and 14B (dashed lines) with essentially uniform electrode spacing g by reduction of the number of radial electrodes going from outer rings to inner rings.

### Beam Steering

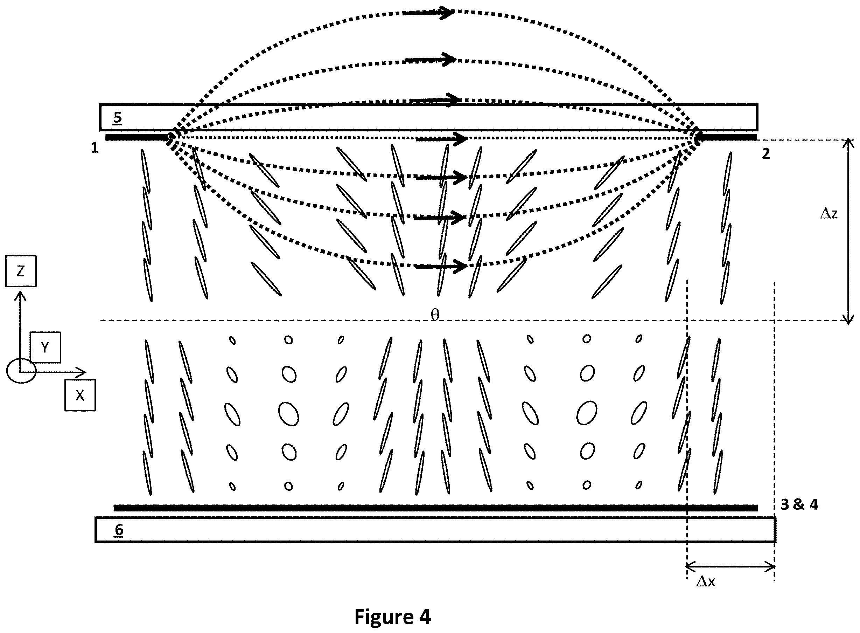

Figure 4 describes very schematically an idealized geometry where both pairs of electrodes (1 & 2 on top substrate 5 and 3 & 4 on bottom substrate 6) are activated simultaneously with a relative phase shift of 180 degrees.

Instead of simultaneous activation of the two electrode arrangements, it is possible to alternate or time multiplex between activation of the upper and lower electrode arrangements.

It is important to mention that the molecular orientation pattern is illustrated in Figure 4 is only to demonstrate qualitatively the concept of polarization rotation and transformation. In no way this is a limiting description. In this geometry, the immediate molecular surfaces will remain in the ground state (homeotropic) when strong anchoring conditions are present (not shown here). The homeotropic alignment will remain the same also in the immediate vicinity (below) of each electrode 1, 2 since the horizontal (or parallel to the substrates) components of electric fields are negligible (see extreme left and right columns of liquid crystal molecules, the zones denoted by Greek letters α, β, χ and δ). The situation may be similar in the center of the LC cell at least for moderate strength electric fields. However, the homeotropic alignment will be greatly perturbed in other zones. Namely, the main (not all) reorientation of molecules in the upper zone (between electrodes 1 and 2) will be in the plane of drawing (x-z) since the "closest" electrode pair 1 and 2 is parallel to the y axis. In contrast, the main (not all) reorientation of LC molecules in the lower zone (between electrodes 3 and 4) will be in the y-z plane that is perpendicular to the plane of drawing since the "closest" electrode pair 3 and 4 is parallel to the x axis.

However, of particular interest is the zone surrounding the area denoted by the letter θ that is between the above mentioned zones. In fact, there transition zones are expected at transitions from liquid crystal orientation from the plane x-z to the plane y-z. The physics of twisted liquid crystal cells was intensively studied in the literature for liquid crystal displays (see, e.g., C.H. Gooch and H.A. Tarry, "The Optical Properties of Twisted Nematic Liquid Crystal Structures with Twist Angles ≤90°", J. Phys. D; Appl. Phys., Vol. 8, 1975). It was already established that if the twisting period P and the effective anisotropy Δn_{eff} are large enough then the input light polarization may be rotated with the twist of liquid crystal molecules as the light beam propagates through the LC material.

In accordance with embodiments of the proposed solution, devices described herein are configured to operate with (dramatically) changed operation principles (physical mechanism) to provide simplifications in the construction of practical devices. Namely, with reference to Figure 4 an incident probe beam of arbitrary polarization enters the LC cell from the side of the top substrate 5 (propagating in -z direction) traversing the device towards the bottom substrate 6). The incident beam polarization may be presented as a sum of two linear polarization components Ex and Ey (parallel to x and y axes, respectively). The electrode strips 1 and 2 are parallel to the y axis, while the electrode strips 3 and 4 are parallel to the x axis. If electrodes 1 and 2 are activated, then the activation will create a molecular reorientation (schematically shown in the upper part of the Figure 4, denoted by Δz). The input linear polarization component Ex, the extraordinary polarization, will then be broadened in the x-z plane due to the "upper" layers (slices) of the non-uniformly reoriented liquid crystal molecules. However, in addition, this polarization component may be rotated (as well as partially changing its polarization state) along its further propagation towards the bottom substrate 6 if the electrodes 3 and 4 are also simultaneously activated. In fact, in this configuration, the lower part of the LC cell by enlarge has more or less similar reorientation of LC molecules (as in the zone Δz) but in the perpendicular plane. However, the central zone (at the level of the letter θ in Figure 4) the two zones (upper and lower areas of LC molecular orientations in more or less perpendicular planes) most likely create a transition zone with molecular twist. If the parameters of the LC cell, its reorientation and the wavelength range of light are appropriately chosen, then the linear polarization component Ex will arrive at substrate 6 with rotated and transformed polarization mainly being parallel to the y axis.

Due to this polarization rotation and transformation, the same polarization component Ex will reach the area affected by electrodes 3 and 4 as mainly a polarization that is perpendicular to the electrode lines 3 and 4. Thus, it will be also broadened in the plane y-z.

At the same time, the input polarization component Ey will mainly remain "unaffected". It will enter into the LC cell as mainly "ordinary" type of polarization and will also undergo polarization rotation (with some partial change of the degree of polarization also) to reach electrode strips 3 and 4 still as "ordinary" polarization. Thus, the LC cell will not affect the input polarization that was originally parallel to the y axis.

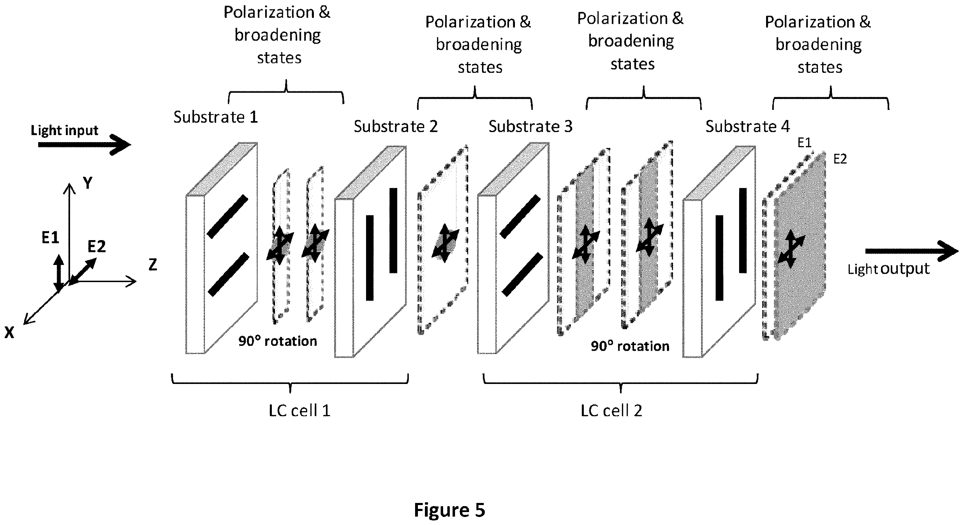

The simultaneous activation and phase shift between electrodes enable employing a single liquid crystal cell to broaden a given linear polarization component of light in two (azimuthal) planes. This type of the LC cell enables the construction of a full-polarization operational device (broadening unpolarised light in two azimuthal planes) by just adding another similar (as described herein with reference to Figure 4) LC cell (element) to the first LC cell. In addition, this may be achieved without using any polarization rotation element (since the liquid crystal itself is used to rotate the light polarization). Indeed, the addition of a second similar LC cell (the "entrance/input side" electrode pairs of the second LC cell being crossed with respect to the "exit/output side" electrode pairs of the first LC cell) and the progression of main polarization and broadening states are schematically presented in the Figure 5 which describes schematically an idealized geometry where both pairs of electrodes (1 & 2 on top substrate 5 and 3 & 4 on bottom substrate 6) are activated with relative phase shift of 180 degrees.

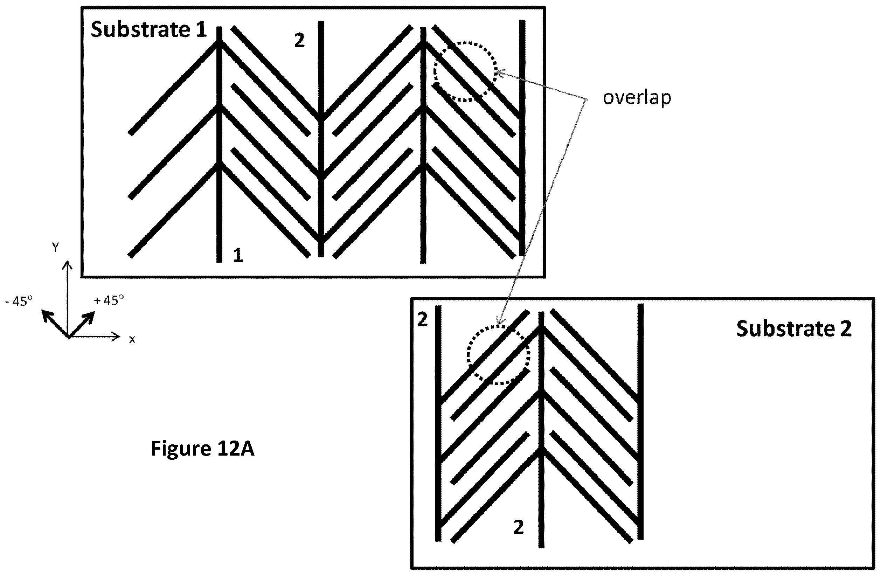

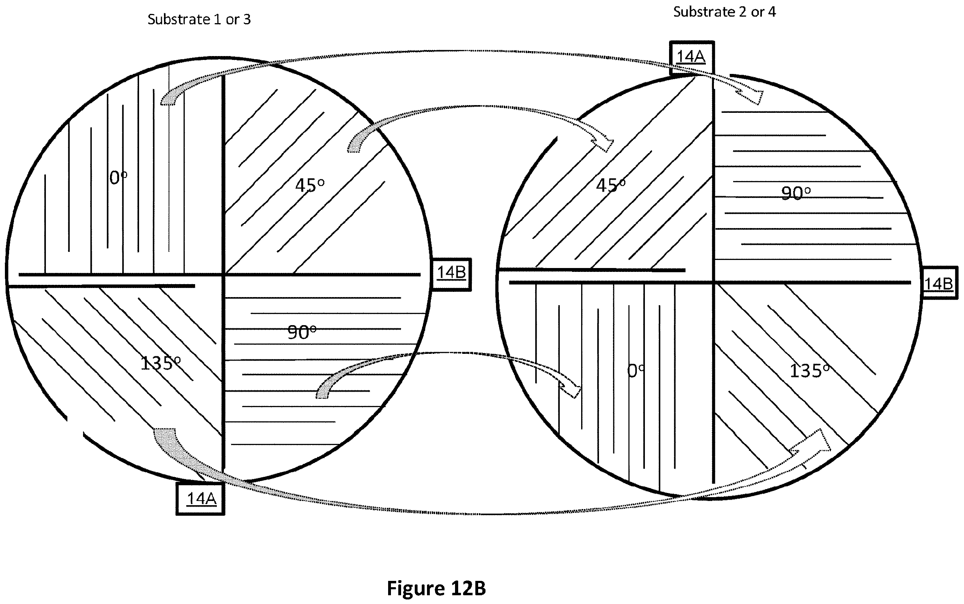

Applicant has discovered that the beam broadening is not symmetrical in X and Y directions in the geometry shown in Figure 5. This is related to the asymmetry of the geometry, namely, the broadening in Y direction, defined by substrate 1 (for E1 polarization) and substrate 3 (for E2 polarization), which affects mainly the incident half of the propagation path of the light within the device, and the broadening in the X direction, defined mainly by substrate 2 (for E1 polarization) and substrate 4 (for E2 polarization), which affects mainly the outgoing half of the propagation path of light within the device, do not have the same efficiency. This asymmetry can be corrected using special intergititated electrode patterns where all (1, 2, 3 and 4) substrates participate in both X and Y broadening directions equally. This can be achieved for example by designing of paired sets of intergititated electrodes on the same substrate, each set of electrodes being orthogonal to the other one. Such a design is shown in, without limiting the invention thereto, in Figures 12A and 12B as described hereinbelow.

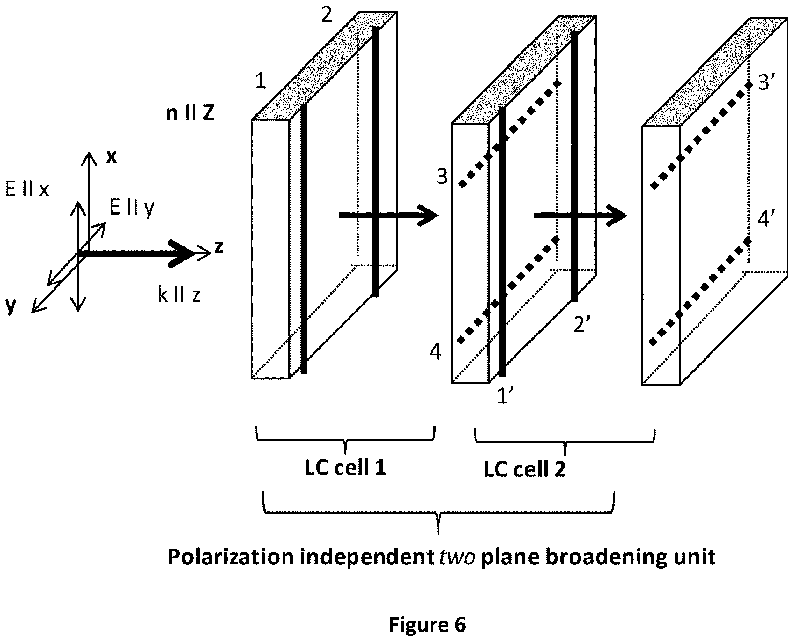

The fact that there is no need for a polarization rotation element and no need for rubbing of the homeotropic (or vertical) alignment layers (7, 18) simplifies greatly the manufacturing of such a beam control device which enables employing only three substrates and only four electrode layers, as shown in the example in Figure 6 illustrating a low cost polarization insensitive light beam broadening element (for two azimuthal planes).

While linear strip electrodes 1, 2, 3, 4 (14A, 14B) can be used to provide beam control elements that are straight; zigzag patterns, sinusoidal patterns, spirals, concentric (Figures 2A and 2B), radial (Figures 3A and 3B) and other geometric patterns can be used. Regular spacing or a "chirping" variation in the spacing between electrodes can be used (see Figure 1).

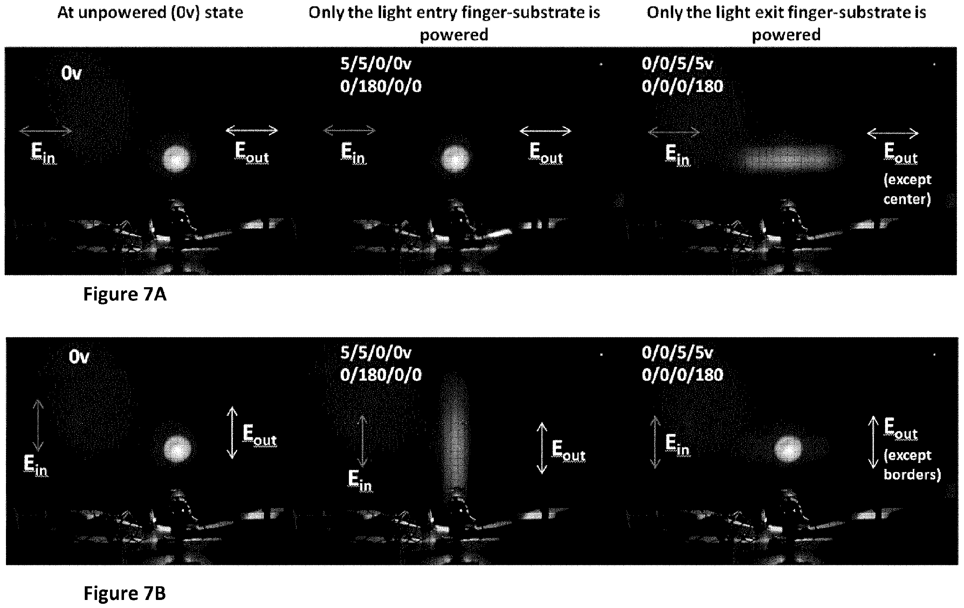

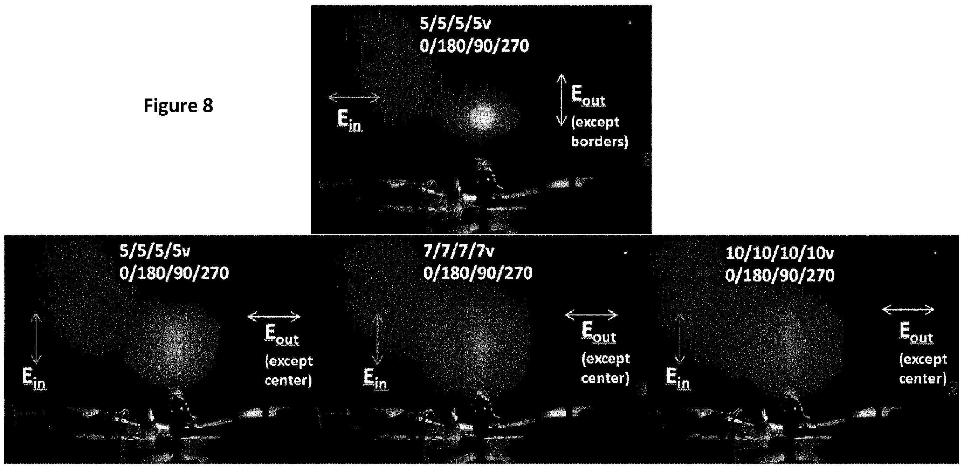

Experimental confirmation is demonstrated with success in Figures 7A, Figure 7B and Figure 8, where there is no polarization rotation when only one pair of electrodes is activated (either 1 & 2 in Figure 7A and 3 & 4 in Figure 7B) and when there is a polarization rotation when both pairs of cross oriented electrodes are activated simultaneously (Figure 8). When both finger-like electrodes on corresponding substrates are simultaneously driven: 90° rotation is observed, all-direction (two azimuthal plane) broadening for one polarized component (with the second polarization component remaining largely unchanged), and providing good rectangular pattern of a broadened light beam (projection).

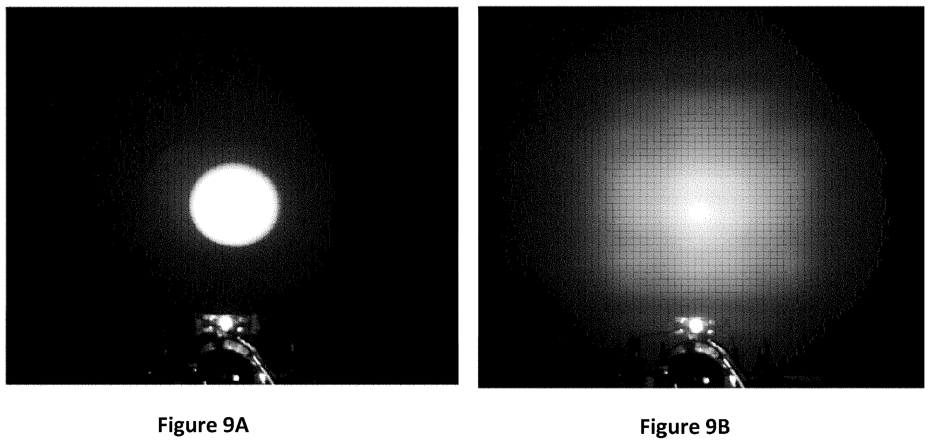

Figures 9A and 9B illustrate experimental demonstration of the importance of having independent electrodes and applying thereto corresponding drive signal components having (appropriate) selected phase delays therebetween to obtain useful acceptable light beam broadening. In Figure 9A all electrodes are driven at 5V in phase, while in Figure 9B all electrodes are driven with 5V drive signals however the signal phases are provided with 0, 180, 90 and 270 degree delays.

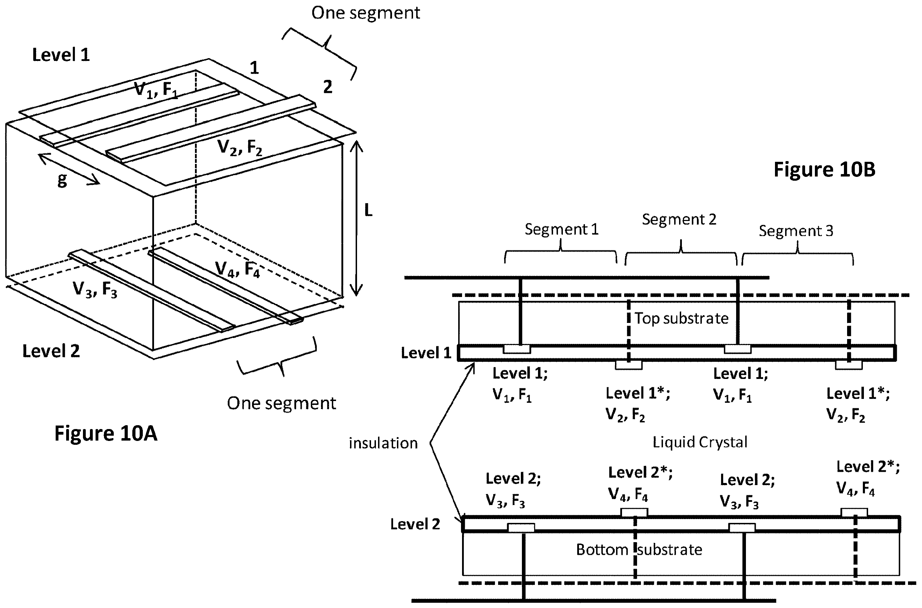

In another embodiment of the proposed solution, similar performance may be achieved by using two layers of electrodes (separated by a thin insulating layer) to build independently controllable electrode pairs for example as schematically illustrated in Figures 10A and 10B. Manufacturing yield may be increased since the overall device would still have large working surface despite the presence of some defects of lithography at a given sub layer. For example, shorts or cuts of neighboring electrode lines at a given layer will not prohibit the propagation of the electric voltage in that layer.

In another embodiment of the proposed solution, the unit LC cell, described in Figure 4 can be replaced by a twisted (90 degree or multiples) liquid crystal layer. In such configuration, the polarization rotation will be ensured (right) from the outset at the ground state.

In another embodiment of the proposed solution, the unit LC cell, described in Figure 4 can be replaced by a LC cell with hybrid alignment liquid crystal layer (planar alignment in one surface and homeotropic alignment on the opposed surface). In such configuration, the beam control device can broaden an unpolarised light beam in a given (azimuthal) plane if all electrodes (on the entrance and exit substrates) are parallel.

In another embodiment of the proposed solution, two LC cells will be spatially shifted with respect to each other and preferably in the diagonal direction (with respect to electrode lines). Such a configuration avoids the coincidence of zones where the reorientation of molecules is not appropriate (such as disclination regions). For example, employing homeotropic alignment (Figure 4), LC molecules tend to remain homeotropic just under (adjacent to) the electrodes. If such disclination regions register (are the same for both) between LC cells, then the light passing through such disclination zones will not follow the same mechanism.

In another embodiment of the proposed solution, a small (separation) distance may be considered between the two unit LC cells which can improve the light intensity distribution.

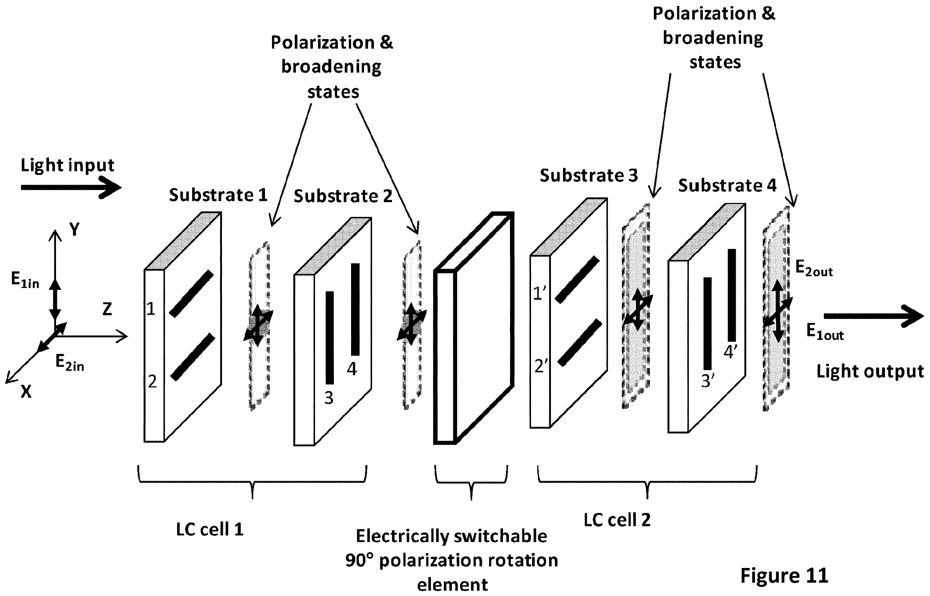

In another embodiment of the proposed solution, an electrically variable (switchable) polarization rotation element can be employed (such as a standard twisted liquid crystal cell) between two unit LC cells to enhance the device operational capabilities. Figure 11 schematically demonstrates such a beam control device which is capable of broadening unpolarised light in one desired (azimuthal) plane only (or in the perpendicular azimuthal plane) and/or double broadening of the desired polarization component of light while the other (perpendicular) component remains substantially unaffected.

For example, consider the application in which it is desired to broaden an unpolarised light beam (which contains two light polarization components at the input of the device; E₁ᵢₙ and E₂ᵢₙ, parallel to y and x axes, respectively) in the plane z-y (Figure 11). In this configuration, selectively activating the electrodes 1 and 2 (deposited on glass substrate 1) and keeping electrodes 3 and 4 (deposited on glass substrate 2) non-activated, will bring to the broadening of light component E₁ᵢₙ in the plane z-y while the component E₂ᵢₙ will remain essentially unaffected. Given that the electrodes 3 and 4 are not activated, the liquid crystal alignment close to the glass substrate 2 remains homeotropic. No polarization rotation is provided and both polarization components exit from the LC cell 1 (the glass substrate 2) with their original orientations (the E₁ᵢₙ being broadened in the in the plane z-y). The polarization components output from LC cell 1 are rotated at 90 degrees when crossing the corresponding element that is placed between the glass substrates 2 and 3 such that the original polarization component E₂ᵢₙ enters into the second LC cell being perpendicular to the electrodes 1' and 2' (deposited on the glass substrate 3). Repeating the same procedure (activating electrodes 1' and 2'; and keeping the electrodes 3' and 4' passive) this polarization component is broadened in the same plane z-y plane. At the same time, the original E₁ᵢₙ component (already broadened in the first LC cell) passes through the second LC cell essentially unaffected. Broadening of two input polarization components (of natural light) is obtained in the plane y-z. It will be appreciated that both polarization components can be broadened in the perpendicular plane (x-z) if electrodes 3 and 4 as well as 3' and 4' are activated while keeping the electrodes 1 and 2 and 1' and 2' passive or un-activated.

The same beam control device could be used also in a mode where the polarization rotation element is switched off (and thus is not performing/providing polarization rotation). In this configuration, the application of the above mentioned procedure almost doubles the beam broadening effect for a given input polarization while the perpendicular light polarization would remain essentially unaffected.

With reference to Figure 11, a single homeotropic LC cell with "excited" twisted molecular reorientation (when all electrodes on opposed substrates are activated simultaneously and independently with different phase control signals) can be used to broaden unpolarized (natural) light in two (azimuthal) planes. This can be provided by employing different zones spread over the clear aperture of the beam control device enabling control of different polarizations in different planes. As it can be appreciated from Figure 12A, the electrode pairs may be etched (or printed) in a "tree-like" manner to have interdigitated electrodes 1 and 2, which are still locally parallel while their orientation alternates on 90 degrees from zone to zone.

The same pattern may be etched or printed on the opposed surface (on the second glass substrate), however during the cell assembly glass substrate 2 would be shifted with respect to the first glass substrate, such that the two encircled zones face each other with electrodes on the glass substrate 2 being perpendicular to electrodes of glass substrate 1 in the zone.

Figure 12B illustrates another geometry with four sets of intergititated electrodes, in which two pairs of electrodes are twisted by 45 degrees in respect to the others. This additionally will improve the broadened light uniformity by smoothening the cross like pattern observed for incident low divergence light beams.

The LC cell may be filled, for example, by a homeotropically aligned liquid crystal (without rubbing). In this configuration, locally, the encircled zone (and others by analogy) act like in the configuration where linear interdigitated electrode pairs were pointing in a given direction on the first substrate and the same pattern, but turned at 90 degrees is employed on the second substrate. Such a single LC cell provides beam broadening of light with an input polarization that is perpendicular to the electrodes (at the first "entrance" glass substrate) in the plane perpendicular to those electrodes and the same light will be broadened in the perpendicular plane near to the exit surface (after having its polarization rotated by 90 degrees). The same concept can be used with different types of electrode arrangements.

A camera or other sensing element may be employed along with a data processor to generate the (drive) control signal(s) and change the divergence or the direction of the transmitted light.

The beam controller can be configured to receive control commands over a data network to adjust the beam broadening and/or direction. Some light sources, for example infrared light sources, can be used to provide data communication, and in this case the beam controller can be used to modulate the light source with data, while the dynamic LC control element can be used to steer and/or broaden/focus the data-carrying beam.

It will be appreciated that beam control in accordance with the different operational states is provided by electronic drive signal circuits that provide the respective drive signals to the electrode pairs. It will also be appreciated that such drive signal circuits can be controlled using suitable controller interfaces. In one non-limiting example, such controller interfaces can include controls associated with a light switch used to power the light source whose light is modulated by the LC device. Control data can be communicated to the drive signal circuit by any suitable data link, such as powerline data communications, free-space optical communications, RF wireless (WIFI, Bluetooth, etc.) and a wired data link to name a few. The controller can be a wall mounted device, an infrared or wireless RF remote control device, or an app on a smartphone to name a few options. The controller can be used to specify the beam control parameters such as one or more of beam breadth in each direction, beam direction in one or two directions, beam intensity and beam color.

While the invention has been illustrated and described with reference to preferred embodiments thereof, it will be recognized by those skilled in the art that various changes in form and detail may be made therein without departing from the scope of the invention as defined by the appended claims.

## Claims

1. A beam control device for shaping an output light beam, the beam control device being configured to receive an incident beam from a light source, the beam control device comprising:
at least one liquid crystal cell for modulating said incident beam as said incident beam propagates therethrough, each liquid crystal cell having:
a pair of cell substrates (5, 6, 12) separated by a cell thickness, L,
a liquid crystal material (20) filling,
at least one alignment layer (7, 18) for ordering said liquid crystal material (20) with a director in a ground state alignment direction, and
a patterned electrode structure having a pattern of paired electrodes (14A, 14B, 14C, 14D, 14A', 14B') on each one of said pair of substrates (5, 6, 12) for providing a spatially modulated electric field extending into said liquid crystal material (20),
said liquid crystal cell having a predetermined aspect ratio between an electrode spacing gap, g, between said paired electrodes (14A, 14B, 14C, 14D, 14A', 14B') and said cell thickness, L;
**characterized in that**:
the patterned electrode structure is configured, when driven by a predetermined drive signal, to provide a spatially modulated director reorientation, providing broadening of said output beam, and
a first patterned electrode structure on said first one of said substrates (5, 6, 12) having first independent electrodes for providing a first in-plane electric field at said first one of said substrates (5, 6, 12) and a first spatial modulation of the liquid crystal material (20) in a first zone near said first substrate and between said first independent electrodes of said first patterned electrode structure, and a second patterned electrode structure arranged at a cross-orientation with respect to said first patterned electrode structure on a second one of said substrates (5, 6, 12) and having second independent electrodes for providing a second in-plane electric field at said second one of said substrates (5, 6, 12) and a second spatial modulation of the liquid crystal material (20) in a second zone near said second substrate and between said second independent electrodes of said second patterned electrode structure, wherein said first and said second patterned electrode structures are configured, when powered, to provide a twist in liquid crystal orientation in a third zone between said first zone and said second zone over at least a portion of an aperture of said device, to provide a polarization rotation in light passing through said device, and
the beam control device further comprises a drive signal source for generating said predetermined drive signal, said drive signal source being configured to provide a variable control over beam divergence.

2. A beam control device as defined in claim 1, wherein said electrode pattern comprises concentric rings (14A, 14B), preferably said beam control device further comprises a complementary orthogonal electrode pattern of radially extending electrode pairs.

3. A beam control device as defined in any one of claims 1 to 2, wherein said aspect ratio of said electrode spacing gap, g, to said cell thickness, L, is between about 0.8 and about 1.3, preferably said electrode spacing gap, g, is one of substantially constant and chirped.

4. A beam control device as defined in any one of claims 1 to 3, wherein said initial beam has a FWHM divergence of about ±5 degrees FWHM and said modulated beam has a FWHM divergence of about +/- 30 degrees FWHM, said predetermined drive signal having a voltage less than 10V, and said good uniformity of said output beam including an intensity of said modulated beam as a function of angle varying less than 40% over about +/- 30 degrees FWHM.

5. A beam control device as defined in any one of claims 1 to 4, further comprising a dynamic diffuser controller.

6. A beam control device as defined in any one of claims 1 to 5, wherein said beam control device is configured to control beam direction or divergence in one azimuthal plane, or to control beam directions or divergence in two azimuthal planes.

7. A beam control device as defined in any one of claims 1 to 3, wherein said beam control device is configured to provide a modulated beam comprising two polarizations of light.

8. A beam control device as defined in any of claims 1 to 7, comprising two of said liquid crystal cell having liquid crystal for shaping light in two azimuthal planes and of both polarizations.

9. A beam control device as defined in any of claims 1 to 8, wherein at least one of said alignment layers (7, 18) provides a homeotropic ground state orientation to said liquid crystal material (20).

10. A beam control device as defined in any of claims 1 to 8, wherein said alignment layers (7, 18) provide an in-plane ground state alignment of said liquid crystal material (20) at each surface of said substrates (5, 6, 12), an in-plane orientation of ground state alignment being crossed or orthogonal between said first and second substrates (5, 6, 12).

11. A beam control device as defined in any of claims 1 to 10, wherein said electrode pattern comprises at least one of:
parallel lanes with predetermined width and gap, g;
concentric lanes with predetermined width and gap, g; and
lanes with spatially variable width and gap, g.

12. A beam control device as defined in any of claims 1 to 11, where at least two of said liquid crystal cells are combined and share a common intermediate substrate having the patterned electrodes (14A, 14B, 14C, 14D, 14A', 14B') on both of its surfaces.

13. A controllable beam shape light source module comprising a beam control device as claim in anyone of claims 1 to 12, and a light source module providing said initial light beam, said light source module is one of a camera flash, an architectural, automobile, industrial lighting device or a scanner light source, preferably the light source comprises a light emitting diode or a laser diode.

## Patentansprüche

1. Strahlsteuerungsvorrichtung zur Formung eines Ausgangslichtstrahls, wobei die Strahlsteuerungsvorrichtung eingerichtet ist zum Empfangen eines einfallenden Strahls von einer Lichtquelle, wobei die Strahlsteuerungsvorrichtung das Folgende umfasst:
mindestens eine Flüssigkristallzelle zum Modulieren des einfallenden Strahls, wenn sich der einfallende Strahl durch sie hindurch ausbreitet, wobei jede Flüssigkristallzelle Folgendes aufweist:
ein Paar von Zellsubstraten (5, 6, 12), die durch eine Zelldicke, L, getrennt sind,
eine Flüssigkristallmaterial (20) -füllung,
mindestens eine Ausrichtungsschicht (7, 18) zum Ordnen des Flüssigkristallmaterials (20) mit einem Direktor in einer Grundzustandsausrichtungsrichtung, und
eine gemusterte Elektrodenstruktur mit einem Muster aus gepaarten Elektroden (14A, 14B, 14C, 14D, 14A' und 14B') auf jedem einzelnen des Paars von Substraten (5, 6, 12) zum Bereitstellen eines räumlich modulierten elektrischen Feldes, das sich in das Flüssigkristallmaterial (20) erstreckt,
wobei die Flüssigkristallzelle ein vorbestimmtes Seitenverhältnis zwischen einem Elektrodenabstand, g, zwischen den gepaarten Elektroden (14A, 14B, 14C, 14D, 14A', 14B`) und der Zelldicke, L, aufweist;
**dadurch gekennzeichnet, dass**:
die gemusterte Elektrodenstruktur eingerichtet ist, wenn sie durch ein vorbestimmtes Ansteuersignal angesteuert wird, zum Bereitstellen einer räumlich modulierten Direktorumorientierung, die eine Verbreiterung des Ausgangsstrahls bereitstellt, und
eine erste gemusterte Elektrodenstruktur auf dem ersten der Substrate (5, 6, 12), die erste unabhängige Elektroden aufweist, zum Bereitstellen eines ersten elektrischen Feldes in der Ebene an dem ersten der Substrate (5, 6, 12) und einer ersten räumlichen Modulation des Flüssigkristallmaterials (20) in einer ersten Zone in der Nähe des ersten Substrats und zwischen den ersten unabhängigen Elektroden der ersten gemusterten Elektrodenstruktur, und eine zweite gemusterte Elektrodenstruktur, die in einer Querorientierung in Bezug auf die erste gemusterte Elektrodenstruktur auf einem zweiten der Substrate (5, 6, 12) angeordnet ist und zweite unabhängige Elektroden aufweist, zum Bereitstellen eines zweiten elektrischen Feldes in der Eben an dem zweiten der Substrate (5, 6, 12) und einer zweiten räumlichen Modulation des Flüssigkristallmaterials (20) in einer zweiten Zone nahe dem zweiten Substrat und zwischen den zweiten unabhängigen Elektroden der zweiten gemusterten Elektrodenstruktur, wobei die erste und die zweite gemusterte Elektrodenstruktur eingerichtet sind, wenn sie mit Strom versorgt werden, zum Bereitstellen einer Verdrehung der Flüssigkristallorientierung in einer dritten Zone zwischen der ersten Zone und der zweiten Zone über mindestens einen Teil einer Öffnung der Vorrichtung, um eine Polarisationsdrehung des durch die Vorrichtung hindurchgehenden Lichts zu bewirken, und
die Strahlsteuerungsvorrichtung ferner eine Ansteuersignalquelle zum Erzeugen des vorbestimmten Ansteuersignals aufweist, wobei die Ansteuersignalquelle eingerichtet ist zum Bereitstellen einer variablen Steuerung der Strahldivergenz.

2. Strahlsteuerungsvorrichtung nach Anspruch 1, wobei das Elektrodenmuster konzentrische Ringe (14A, 14B) umfasst, wobei die Strahlsteuerungsvorrichtung vorzugsweise ferner ein komplementäres orthogonales Elektrodenmuster aus sich radial erstreckenden Elektrodenpaaren umfasst.

3. Strahlsteuerungsvorrichtung nach einem der Ansprüche 1 bis 2, wobei das Seitenverhältnis des Elektrodenabstands, g, zur Zelldicke, L, zwischen etwa 0,8 und etwa 1,3 liegt, wobei der Elektrodenabstand, g, vorzugsweise im Wesentlichen konstant oder gechirpt ist.

4. Strahlsteuerungsvorrichtung nach einem der Ansprüche 1 bis 3, wobei der Initialstrahl eine FWHM-Divergenz von etwa ±5 Grad FWHM und der modulierte Strahl eine FWHM-Divergenz von etwa +/- 30 Grad FWHM aufweist, wobei das vorbestimmte Ansteuersignal eine Spannung von weniger als 10 V hat und die gute Gleichmäßigkeit des Ausgangsstrahls eine Intensität des modulierten Strahls als Funktion des Winkels einschließt, die weniger als 40% über etwa +/-30 Grad FWHM variiert.

5. Strahlsteuerungsvorrichtung nach einem der Ansprüche 1 bis 4, die ferner eine dynamische Diffusorsteuerung umfasst.

6. Strahlsteuerungsvorrichtung nach einem der Ansprüche 1 bis 5, wobei die Strahlsteuerungsvorrichtung eingerichtet ist zum Steuern der Strahlrichtung oder -divergenz in einer azimutalen Ebene oder zum Steuern der Strahlrichtung oder -divergenz in zwei azimutalen Ebenen.

7. Strahlsteuerungsvorrichtung nach einem der Ansprüche 1 bis 3, wobei die Strahlsteuerungsvorrichtung eingerichtet ist zum Bereitstellen eines modulierten Strahls mit zwei Lichtpolarisationen.

8. Strahlsteuerungsvorrichtung nach einem der Ansprüche 1 bis 7, die zwei der Flüssigkristallzellen mit Flüssigkristall zum Formen von Licht in zwei azimutalen Ebenen und von beiden Polarisationen umfasst.

9. Strahlsteuerungsvorrichtung nach einem der Ansprüche 1 bis 8, wobei mindestens eine der Ausrichtungsschichten (7, 18) dem Flüssigkristallmaterial (20) eine homöotrope Grundzustandsorientierung verleiht.

10. Strahlsteuerungsvorrichtung nach einem der Ansprüche 1 bis 8, wobei die Ausrichtungsschichten (7, 18) eine in der Ebene liegende Grundzustandsausrichtung des Flüssigkristallmaterials (20) an jeder Oberfläche der Substrate (5, 6, 12) bereitstellen, wobei eine in der Ebene liegende Ausrichtung der Grundzustandsausrichtung gekreuzt oder orthogonal zu dem ersten und dem zweiten Substrat (5, 6, 12) ist.

11. Strahlsteuerungsvorrichtung nach einem der Ansprüche 1 bis 10, wobei das Elektrodenmuster mindestens eines der folgenden Merkmale aufweist:
parallele Bahnen mit vorgegebener Breite und Lücke, g;
konzentrische Bahnen mit vorbestimmter Breite und Lücke, g; und
Bahnen mit räumlich variabler Breite und Lücke, g.

12. Strahlsteuerungsvorrichtung nach einem der Ansprüche 1 bis 11, wobei mindestens zwei der Flüssigkristallzellen miteinander kombiniert sind und ein gemeinsames Zwischensubstrat mit den gemusterten Elektroden (14A, 14B, 14C, 14D, 14A', 14B`) auf beiden Oberflächen aufweisen.

13. Steuerbares Strahlform-Lichtquellenmodul, umfassend eine Strahlsteuerungsvorrichtung nach einem der Ansprüche 1 bis 12 und ein Lichtquellenmodul, das den Initiallichtstrahl bereitstellt, wobei das Lichtquellenmodul ein Kamerablitz, eine Architektur-, Automobil-, Industriebeleuchtungsvorrichtung oder eine Scannerlichtquelle ist, wobei die Lichtquelle vorzugsweise eine Leuchtdiode oder eine Laserdiode aufweist.

## Revendications

1. Dispositif de commande de faisceau pour mettre en forme un faisceau lumineux de sortie, le dispositif de commande de faisceau étant configuré pour recevoir un faisceau incident en provenance d'une source lumineuse, le dispositif de commande de faisceau comprenant :
au moins une cellule à cristaux liquides pour moduler ledit faisceau incident au fur et à mesure que ledit faisceau incident se propage à travers elle, chaque cellule à cristaux liquides présentant :
une paire de substrats de cellule (5, 6, 12) séparés par une épaisseur de cellule, L,
un matériau à cristaux liquides (20) de remplissage,
au moins une couche d'alignement (7, 18) pour ordonner ledit matériau à cristaux liquides (20) avec un directeur dans une direction d'alignement à l'état fondamental, et
une structure d'électrodes à motifs présentant un motif d'électrodes appariées (14A, 14B, 14C, 14D, 14A', 14B') sur chacun de ladite paire de substrats (5, 6, 12) pour fournir un champ électrique modulé spatialement s'étendant dans ledit matériau à cristaux liquides (20),
ladite cellule à cristaux liquides ayant un rapport d'aspect prédéterminé entre un écart d'espacement d'électrodes, g, entre lesdites électrodes appariées (14A, 14B, 14C, 14D, 14A', 14B') et ladite épaisseur de cellule, L ;
**caractérisé en ce que** :
la structure d'électrodes à motifs est configurée, lorsqu'elle est excitée par un signal d'excitation prédéterminé, pour fournir une réorientation de directeur modulée spatialement, donnant lieu à un élargissement dudit faisceau de sortie, et
une première structure d'électrodes à motifs sur ledit premier desdits substrats (5, 6, 12) ayant des premières électrodes indépendantes pour fournir un premier champ électrique dans le plan au niveau dudit premier desdits substrats (5, 6, 12) et une première modulation spatiale du matériau à cristaux liquides (20) dans une première zone à proximité dudit premier substrat et entre lesdites premières électrodes indépendantes de ladite première structure d'électrodes à motifs, et une seconde structure d'électrodes à motifs disposée selon une orientation transversale par rapport à ladite première structure d'électrodes à motifs sur un second desdits substrats (5, 6, 12) et ayant des secondes électrodes indépendantes pour fournir un second champ électrique dans le plan au niveau dudit second desdits substrats (5, 6, 12) et une seconde modulation spatiale du matériau à cristaux liquides (20) dans une deuxième zone près dudit second substrat et entre lesdites secondes électrodes indépendantes de ladite seconde structure d'électrodes à motifs, dans lequel lesdites première et seconde structures d'électrodes à motifs sont configurées, lorsqu'elles sont sous tension, pour produire une torsion de l'orientation des cristaux liquides dans une troisième zone entre ladite première zone et ladite deuxième zone sur au moins une partie d'une ouverture dudit dispositif, afin d'assurer une rotation de polarisation de la lumière traversant ledit dispositif, et
le dispositif de commande de faisceau comprend en outre une source de signal d'excitation pour générer ledit signal d'excitation prédéterminé, ladite source de signal d'excitation étant configurée pour assurer une commande variable de la divergence de faisceau.

2. Dispositif de commande de faisceau tel que défini dans la revendication 1, dans lequel ledit motif d'électrode comprend des anneaux concentriques (14A, 14B), de préférence ledit dispositif de commande de faisceau comprend en outre un motif d'électrodes orthogonales complémentaires de paires d'électrodes s'étendant radialement.

3. Dispositif de commande de faisceau tel que défini dans l'une quelconque des revendications 1 à 2, dans lequel ledit rapport d'aspect dudit écart d'espacement d'électrodes, g, par rapport à ladite épaisseur de cellule, L, est compris entre environ 0,8 et environ 1,3, de préférence ledit écart d'espacement d'électrodes, g, est l'un parmi essentiellement constant et chirpé.

4. Dispositif de commande de faisceau tel que défini dans l'une quelconque des revendications 1 à 3, dans lequel ledit faisceau initial a une divergence de largeur à mi-hauteur FWHM d'environ ±5 degrés de FWHM et ledit faisceau modulé a une divergence de FWHM d'environ +/- 30 degrés de FWHM, ledit signal d'excitation prédéterminé ayant une tension inférieure à 10 V, et ladite bonne uniformité dudit faisceau de sortie comportant une intensité dudit faisceau modulé en fonction de l'angle variant de moins de 40 % sur environ +/- 30 degrés de FWHM.

5. Dispositif de commande de faisceau tel que défini dans l'une quelconque des revendications 1 à 4, comprenant en outre un contrôleur de diffuseur dynamique.

6. Dispositif de commande de faisceau tel que défini dans l'une quelconque des revendications 1 à 5, dans lequel ledit dispositif de commande de faisceau est configuré pour commander la direction ou la divergence de faisceau dans un seul plan azimutal, ou pour commander des directions ou la divergence de faisceau dans deux plans azimutaux.

7. Dispositif de commande de faisceau tel que défini dans l'une quelconque des revendications 1 à 3, dans lequel ledit dispositif de commande de faisceau est configuré pour fournir un faisceau modulé comprenant deux polarisations de la lumière.

8. Dispositif de commande de faisceau tel que défini dans l'une quelconque des revendications 1 à 7, comprenant deux de ladite cellule à cristaux liquides présentant un cristal liquide pour mettre en forme la lumière dans deux plans azimutaux et selon deux polarisations.

9. Dispositif de commande de faisceau tel que défini dans l'une quelconque des revendications 1 à 8, dans lequel au moins une desdites couches d'alignement (7, 18) fournit une orientation homéotropique de l'état fondamental dudit matériau à cristaux liquides (20).

10. Dispositif de commande de faisceau tel que défini dans l'une quelconque des revendications 1 à 8, dans lequel lesdites couches d'alignement (7, 18) fournissent un alignement dans le plan de l'état fondamental dudit matériau à cristaux liquides (20) à chaque surface desdits substrats (5, 6, 12), une orientation dans le plan de l'alignement de l'état fondamental étant transversale ou orthogonale entre lesdits premier et second substrats (5, 6, 12).

11. Dispositif de commande de faisceau tel que défini dans l'une quelconque des revendications 1 à 10, dans lequel ledit motif d'électrode comprend au moins une parmi :
des voies parallèles d'une largeur et d'un écart, g, prédéterminés ;
des voies concentriques d'une largeur et d'un écart, g, prédéterminés ; et
des voies d'une largeur et d'un écart, g, variables spatialement.

12. Dispositif de commande de faisceau tel que défini dans l'une quelconque des revendications 1 à 11, dans lequel au moins deux desdites cellules à cristaux liquides sont combinées et partagent un substrat intermédiaire commun présentant les électrodes à motifs (14A, 14B, 14C, 14D, 14A', 14B') sur ses deux surfaces.

13. Module de source lumineuse de forme de faisceau réglable comprenant un dispositif de commande de faisceau tel que revendiqué dans l'une quelconque des revendications 1 à 12, et un module de source lumineuse fournissant ledit faisceau lumineux initial, ledit module de source lumineuse est l'un d'un flash d'appareil photo, d'un dispositif d'éclairage architectural, automobile, industriel ou d'une source lumineuse de scanner, de préférence la source lumineuse comprend une diode électroluminescente ou une diode laser.
